# EUROPEAN PATENT SPECIFICATION

(11) **EP 2 888 790 B1**
(45) Date of publication and mention of the grant of the patent: **03.04.2019**
(21) Application number: 13756662.6
(22) Date of filing: 21.08.2013
(51) Int. Cl.: H01S 3/109, H01S 3/02, H01S 3/04, H01S 3/082, H01S 3/105, H01S 3/098, H01S 3/16

(54) **HIGH POWER SOLID-STATE LASER WITH REPLACEABLE MODULE FOR UV GENERATION**
HOCHLEISTUNGS-FESTKÖRPERLASER MIT AUSWECHSELBAREM MODUL ZUR ERZEUGUNG VON UV-STRAHLUNG
LASER À SOLIDE À HAUTE PUISSANCE DOTÉ D'UN MODULE REMPLAÇABLE POUR LA GÉNÉRATION D'UV

(30) Priority: 21.08.2012 GB 201214856
(43) Date of publication of application: 01.07.2015
(73) Proprietor: Andritz Powerlase Limited, Crawley West Sussex RH10 9RA (GB)
(72) Inventor: KWON, Young Key, Oviedo, Florida 32765 (US); RODIN, Aleksej, 01118 Vilnius (LT)
(74) Representative: Roberts, Gwilym Vaughan
(86) International application number: PCT/GB2013/052206
(87) International publication number: WO 2014/029996

(56) References cited:
- DE-B3-102007 027 680
- JP-A- 2004 022 946
- US-A- 5 943 351
- US-A1- 2003 011 872
- US-A1- 2008 291 528

## Description

### Field

The present disclosure relates to an intracavity module and a laser resonator cavity. In particular, the present disclosure relates to a replaceable intracavity module for a high power laser. More particularly, the present disclosure relates to a plug-in/plug-out frequency conversion module for a continuous wave (CW) or pulsed laser.

### Background

It is known that certain materials possess frequency conversion properties. Laser radiation at one frequency may be converted into radiation at a second frequency using a suitable material such as a non-linear optical crystal. For example, a Nd:YAG laser produces radiation at 1064 nm (near infra-red) which may be converted to 532 nm (green) by second harmonic generation using, for example, a potassium dideuterium phosphate (KDP) crystal. The second harmonic radiation at 532 nm mixed in the frequency conversion material with fundamental radiation at 1064 nm may provide conversion to the third harmonic, in the ultra-violet (UV) wavelength range.

However, elements suitable for frequency conversion, including non-linear optical crystals, have a very limited lifetime when subjected to high peak power laser pulses. Replacing the frequency conversion element in a commercial laser can lead to significant down-time not least because optical alignment is a key issue for high power lasers, in particular. Crystal replacement and laser realignment often have to be done in a clean room to prevent the laser components, especially UV laser cavity components, being exposed to a dusty environment. Accordingly, attention has focused on external modules for frequency conversion in which a user may extend the lifetime of the frequency conversion element without significant inconvenience.

It is known to provide a frequency conversion element in an external module outside the primary laser cavity such as the laser oscillator and/or amplifier. Typically, light from the laser cavity at the fundamental wavelength is directed or focused onto the frequency conversion element and the light wavelength is converted. For example, a higher harmonic may be generated. The light is directed or focused onto the frequency conversion element so as to irradiate only a small portion of the frequency conversion element. Conversion efficiency falls as the frequency conversion element degrades but a user may translate the frequency conversion element to a new position relative to the carefully aligned primary beam to irradiate a fresh part of the frequency conversion element. Accordingly, a user may extend the lifetime of a frequency conversion element without significant downtime or a visit from a laser engineer, for example. Notably, there is no disruption to the primary laser cavity. This technique may be referred to as "cycling" or "shifting".

Compared to the focused spot size using for cycling, the spot size of the laser light inside the laser cavity is relatively large - typically, several millimetres. Despite the relatively large beam diameter inside the cavity, the power of the radiation circulating inside the cavity is significantly higher than outside the cavity. Accordingly, it has been found that the theoretical maximum frequency conversion efficiency of frequency conversion elements may be higher when the frequency conversion element is inside the cavity. Therefore, in theory, methods for frequency conversion using elements inside the laser cavity may be preferred if problems associated with the downtime and inconvenience of making adjustments to the primary laser cavity may be overcome.

Replaceable modules comprising a frequency conversion element in a laser cavity are known from US 2003/0011872 A1, DE 10 2007 027 680 B3 and US 5,943,351 A.

The present disclosure aims to address these problems and provide an improved intracavity frequency conversion apparatus and method.

### Summary

Aspects of an invention are defined in the appended independent claims.

There is provided an intracavity module arranged to replaceably-mount, or fit, within a laser resonator cavity. That is, the module is arranged to plug-in and plug-out of a primary laser cavity such as a laser oscillator and/or amplifier. The module comprises a first optical element, a second optical element and a frequency conversion element. The frequency conversion element is arranged to receive light at one frequency and output light at a second frequency. The first frequency is not equal to the second frequency. The frequency conversion element may be a higher harmonic generator such as a second, third or fourth harmonic generator. The frequency conversion element may be a non-linear optical crystal. The frequency conversion element is encapsulated by at least the first optical element and the second optical element. That is, the frequency conversion element is sealed within a space, cavity, region or volume at least partially bound by the first optical element and the second optical element. The first optical element may bound one side of the enclosed cavity and the second optical element may bound the other side. Other elements, such as housing, complete the encapsulation. The first and second optical elements may have a predetermined reflectivity and transmissivity at the first and second frequencies. The first and/or second optical element may be a mirror or an optical windows, for example.

Advantageously, delicate optical components and coatings may be protected from the outside environment. In particular, the frequency conversion element itself may be protected as may be surfaces of the first and/or second optical elements. Accordingly, delicate optical coatings may be used on the inner surfaces of the optical elements. Further advantageously, the environment inside the encapsulated volume may be very carefully controlled. For example, the encapsulated volume may be gas purged, vacuumed. Notably, the module may be optically pre-aligned so that a user may remove an old module and replace it with a new module without significant downtime or visit from a laser engineer. Conveniently, there is provided a self-contained frequency conversion module for a laser.

The present disclosure also addresses the problems caused in a laser cavity by the presence of high power UV radiation. The conventional way to prevent damage associated with UV radiation during laser operation is to completely seal the laser cavity to prevent any exposure to the outside environment. This avoids contaminants entering the laser cavity and damaging optical components when irradiated by UV radiation. However, this approach is impractical when the frequency conversion elements are inside the laser cavity.

There is also provided a laser resonator cavity wherein one of the first or second optical elements of the intracavity module forms one of the laser resonator mirrors. Accordingly, a more compact device may be provided. Advantageously, an inner surface of one of the laser resonator mirrors is therefore protected from the environment. Furthermore, the laser resonator mirror may be optically pre-aligned with respect to the other optical components.

There is therefore realised a practical module for intracavity frequency conversion.

### Brief description of the drawings

Embodiments of the present disclosure will now be described with reference to the accompanying drawings in which:
Figure 1 shows an example laser cavity;
Figure 2 is a schematic of an intracavity module in accordance with an embodiment;
Figure 3 is a schematic of an intracavity module in accordance with another embodiment;
Figure 4 is a schematic of an intracavity module in accordance with a yet further embodiment;
Figure 5 is a schematic of an intracavity module in accordance with a yet further embodiment; and
Figure 6 is a schematic of an intracavity module in accordance with a yet further embodiment.

In the figures, like reference numerals refer to like parts.

Reference to non-linear conversion crystals in the following is by way of example only and the skilled person will understand that other frequency conversion elements may be equally suitable.

Described embodiments relate to a module for third harmonic generation by way of example only and the skilled person will understand that the module may be equally suitable for any type of frequency conversion including second harmonic and fourth harmonic generation. That is, the frequency conversion element in the intracavity module may be any higher harmonic generator.

### Detailed description

In summary, there is described a method and apparatus which extends the operational lifetime and significantly reduces the maintenance costs of high average-power lasers with intracavity frequency conversion. This is achieved by encapsulating a frequency conversion element - such as a non-linear frequency conversion crystal - between two optical elements - such as mirrors or optical windows - to form a robust, sealed and pre-aligned module providing specified replacement accuracy.

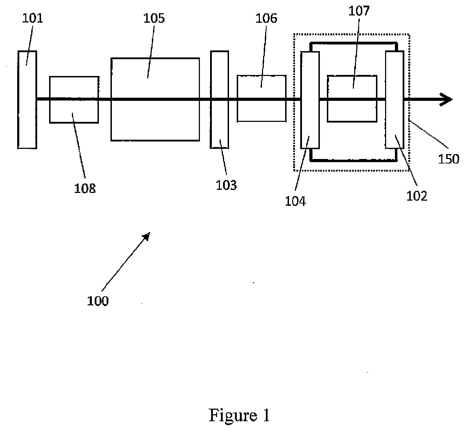

The replaceable, sealed and pre-aligned module may be used for the non-linear frequency conversion of primary radiation propagating inside the cavity of a high average-power laser. An example is illustrated in Fig. 1 where there is shown a laser resonator cavity 100.

In figure 1, there is also shown the following optical elements in sequence on a common optical axis: a first laser cavity mirror 101, a Q-switch 108, a laser gain medium 105, a first intracavity mirror 103, a second harmonic non-linear conversion crystal 106, a second intracavity mirror 104, a third harmonic nonlinear conversion crystal 107 and a second laser cavity mirror 102. The second intracavity mirror 104, third harmonic nonlinear conversion crystal 107 and second laser cavity mirror 102 form an intracavity module 150 in accordance with embodiments of the present disclosure.

Intracavity module 150 is removably-mounted inside the laser resonator cavity 100. Notably, mirror 102 forms one of the two mirrors for the cavity for the third harmonic generation and also one of the two mirrors for the laser resonator cavity 100 itself.

That is, advantageously, mirror 102 performs a dual-function. The third harmonic nonlinear conversion crystal 107 is encapsulated by at least the second intracavity mirror 104 and the second laser cavity mirror 102. Encapsulation may be completed using further elements.

A "nested" laser cavity is formed by mirrors 101, 102, 103 and 104. The main cavity for the build-up and propagation of laser radiation at the fundamental wavelength of the laser is formed by laser gain medium 105 placed between mirrors 101 and 102 which have a high reflectivity dielectric coating at the fundamental wavelength. Besides the high reflectivity at fundamental wavelength, mirror 102 also possess high reflectivity at the wavelength of the second and third harmonics of the fundamental wavelength.

A "nested" internal cavity for wavelength, or frequency, doubling is formed by a second harmonic non-linear conversion crystal 106 placed between mirrors 102 and 103. Mirror 103 transmits radiation propagating at the fundamental wavelength and reflects radiation at the wavelength of the second harmonic. A "nested" internal cavity 150 for wavelength tripling is also included comprised a third harmonic nonlinear conversion crystal 107 placed between mirrors 102 and 104 and forming an encapsulated replaceable module. Mirror 104 is transmitting at the fundamental and second harmonic wavelengths but reflecting at the wavelength of the third harmonic. Pulsed operation is provided by Q-switch 108.

Accordingly, the third harmonic non-linear conversion crystal is arranged to receive light at a first frequency - the second harmonic of the fundamental laser resonator frequency - and output light at a second frequency - the third harmonic of the fundamental frequency of the laser resonator cavity. The second frequency may be generated by mixing the fundamental radiation with the second harmonic within the non-linear conversion crystal. In embodiments, the non-linear conversion crystal is therefore arranged to receive light at at least a first frequency or receive light at a plurality of frequencies. However, the skilled person will understand that the present disclosure is not limited to third, or higher, harmonic generation. For example, in another embodiment, the first frequency is the fundamental frequency of the laser resonator cavity and the second frequency is the second harmonic of the laser resonator cavity.

The first intracavity mirror 103 and/or second intracavity mirror 104 may be fixedly mounted in the laser resonator cavity rather than being part of the replaceably-mounted intracavity module. In this example optical windows or other transmissive elements may replace one or both intracavity mirrors in the intracavity module.
Accordingly, there is provided an intracavity module comprising a first optical element and a second optical element. The first and second optical elements may therefore be reflective or transmissive at the second frequency. The reflectivity/transmissivity of the second optical element need not be the same as that of the first optical element.

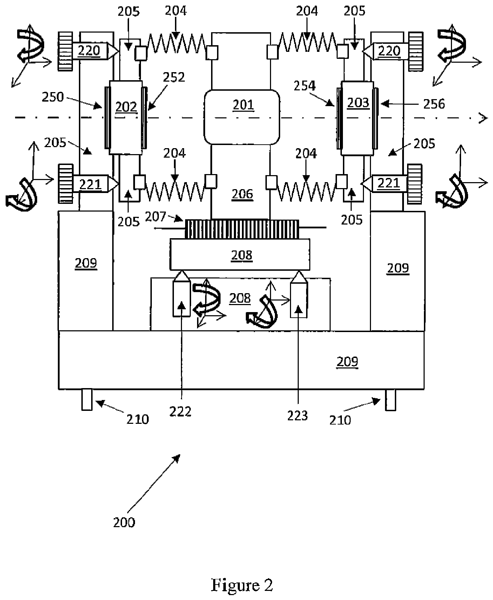

An intracavity module in accordance with an embodiment is shown in Fig.2. A replaceably-mounted intracavity module 200 is formed by a non-linear optical crystal 201 placed in the cavity or space between mirrors 202 and 203 and sealed from the external environment by bellows 204. Mirrors 202 and 203 are placed on kinematic mounts 205 to allow two-directional alignment using fine screws 220 and 221. Non-linear optical crystal 201 is installed on a oven 206 which is thermally stabilised by a Peltier element 207. A kinematic platform 208 provides two-directional alignment for the non-linear optical crystal 201 using fine screws 222 and 223. Kinematic mirror mounts 205 and kinematic platform 208 are attached to a baseplate 209. Intracavity module 200 may be removed and/or replaced on a laser breadboard with defined position accuracy using dowels 210. The skilled person will understand that other means may be equally suitable for accurately defining the position of the intracavity module within the laser resonator cavity.
Mirror 202 has dielectric anti-reflection coating 250 for the fundamental and second harmonics wavelength and high-reflection dielectric coating 252 for the wavelength of third harmonics. Mirror 203 has high-reflection dielectric coating 254 on the wavelength of fundamental, second and third harmonics and anti-reflection coating 256 for the wavelength of third harmonics. Facets of non-linear optical crystal 201 may be anti-reflection coated at the fundamental and harmonics wavelengths. There is therefore provided a sealed enclosure which protects sensitive internal high-reflectivity dielectric coatings 252 and 254 on mirrors 202 and 203, respectively, from environmental contamination. External anti-reflection coating 250 and 256 have significantly higher damage threshold to light propagating inside the laser cavity.

Advantageously, in embodiments, mirror 203 forms one of the laser resonator cavity mirrors. This provides a more compact cavity.

More advantageously, intracavity modules in accordance with the present disclosure provide a single integrated, pre-aligned frequency conversion module with volume encapsulation between the non-linear crystal facets and surrounding optics, which can be readily plugged in and plugged out of a master laser cavity.

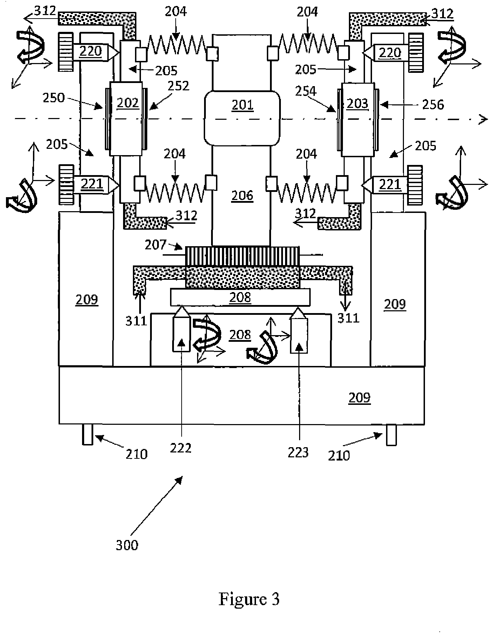

Another embodiment for a high average-power laser is shown in Fig.3.

A considerable amount of heat is dissipated by the non-linear optical crystal 201 due to absorption of internal emissions propagating in the cavity. Therefore, Peltier element 207 is water-cooled 311. Heat dissipated by the mirrors 202 and 203 due to absorption of intracavity emission is removed by connection of further water cooling 312. In other words, mirrors 202 and 203 are water-cooled mirrors.

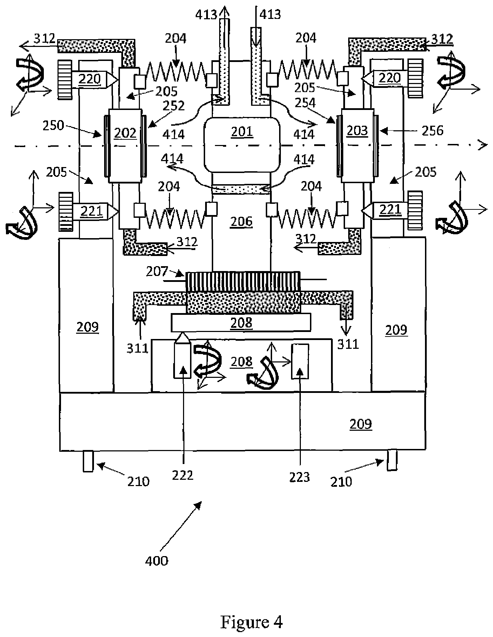

A yet further embodiment, particularly suitable for high average-power laser operation in a demanding industrial material processing environment, is shown in Fig.4.

Additional gas purge pipes 413 ensure sequential gas flow 414 in the compartment between exit facet of nonlinear optical crystal 201 and dielectric coating 254 on the surface of mirror 203, when in the compartment formed by entrance surface of non-linear optical crystal 201 and dielectric coating 252 on the surface of mirror 202. Gas purge prevents the contamination of high reflection dielectric coatings 252, 254 and anti-reflective coating on the surface of non-linear optical crystal 201 by the products of photochemical reaction between intensive UV radiation from the third harmonic and residual organic molecules inside the module.

Optionally, gas connection fittings 413 provide a vacuum inside the replaceable sealed module to remove the products of photochemical reaction between intensive UV radiation and residual organic molecules inside the module.

Advantageously, in embodiments, additional gas purge pipes provide an integrated, pre-aligned intracavity module with internal environment control inside the encapsulated module. Further advantageously, in embodiments, the water cooling 312 provides yet further improved environmental control inside the intracavity module.

The thermal expansion of some non-linear crystals such as, lithium triborate, LBO is significantly different to antireflection coating materials deposited on the facets of the non-linear crystals. Moreover, the thermal expansion of these crystals is highly anisotropic. These effects lead to unwanted gradual delamination of deposited antireflection coatings during thermal cycling processes such as subsequent activation and deactivation of laser operation. In particular, these effects are a problem for the facets of a non-linear crystal placed inside the cavity of a high average power laser because they experience strong non-uniform heating due to absorption of the circulating optical power.

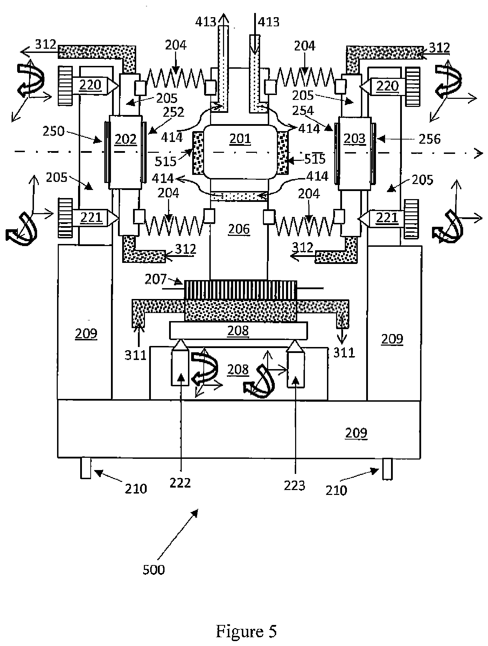

A yet further embodiment for further extending the operational lifetime of the non-linear crystal and intracavity mirrors of the replaceably-mounted intracavity module is shown in Fig. 5.

In Fig. 5, additional windows 515 are bonded to the input and output facets of non-linear optical crystal 201 in order to improve thermal management of the non-linear crystal by uniformly distributing the heat over the facets. Bonded windows 515 also provide protection of the non-linear crystal facets in order to extend the lifetime. Windows 515 may be antireflection coated for one or more wavelengths of laser radiation circulating inside the cavity. In embodiments, the additional windows are made from materials which exhibit high thermal conductivity and smaller thermal expansion such as Sapphire or CaF₂. In other words, in an embodiment, at least one facets of frequency conversion element is bonded, such as directly bonded, to an optical window. In an embodiment, windows are arranged on and perpendicular to the common optical axis at the input and output facet of the non-linear crystal.

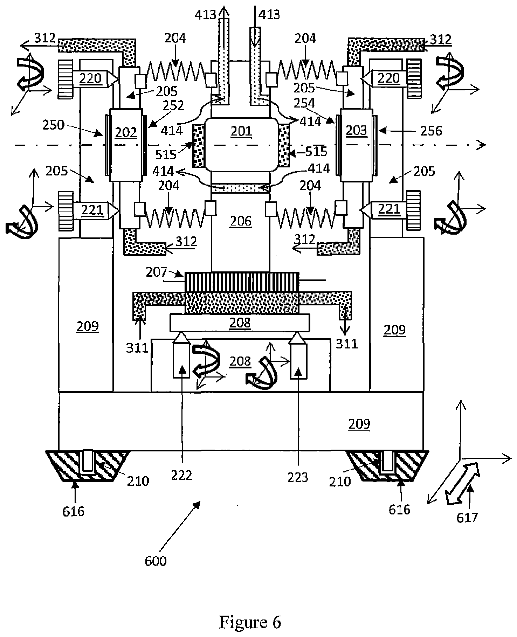

In a further embodiment shown in Fig 6, the replaceably-mounted intracavity module is mounted onto additional translation rails 616 for translating the intracavity module along a plane perpendicular to the common optical axis of the intracavity module. By translating the intracavity module 600 along this plane the user can reposition the intracavity module 600 and direct an incident beam to a fresh region of the non-linear crystal 20 and intracavity mirrors 202, 203 whilst preserving their optical alignment along the optical axis. In one embodiment the translation rails 616 are one-directional and may provide continuous and step translation 617 either by manual or motorised movement. In another embodiment, the translation rails 616 are bi-directional. Furthermore, means for circular or spiral movement may be employed. Accordingly, the user may extend the operational lifetime of the intracavity module without significant downtime or a visit from a maintenance engineer. Notably, there is no disruption to the primary laser cavity. In other words, the intracavity module is attached to translation means for translating the intracavity module in one or more directions.

In another embodiment, the frequency conversion assembly formed by non-linear crystal 201 inside the oven 206 on Peltier element 207 on kinematic platform 208 is arranged with separate translation rails inside the module for translating the non-linear crystal while intracavity mirrors 202 and 203 remain permanently mounted providing original alignment and sealing integrity of frequency conversion module.

The present disclosure is particularly suitable for high average-power lasers - for example, laser having an average power greater than 10W - in which laser-induced damage is a problem. In embodiments, the laser is a Nd:YAG laser operating at 1064 nm. That is, the laser gain medium may be Nd:YAG. Embodiments relate to a replaceably-mounted module for generating the third harmonic of the Nd:YAG laser which is in the ultra-violet. Additional problems therefore arise owing to complex photochemical reactions because most optical and coating materials are vulnerable to UV and deep UV radiation. The damage mechanisms in bulk materials are well known and controllable to some extent. However, contamination, outgas and humidity in the laser operating environment are a major source of material and coating degradation and damage in UV lasers. In contrast, for second harmonic generation, the optics and coatings are not as absorptive to visible green radiation and damage is therefore less of a problem. The present disclosure is therefore particularly suitable for laser and frequency conversion modules generating UV radiation.

Whilst embodiments relate to Nd:YAG and the third harmonic thereof, the skilled person will understand that the present disclosure is equally applicable to other lasers such as Nd:YAP, Nd:YLF, Nd:YAlO, Nd:YVO₄, Yb:YAG and Nd:glass.

The skilled person will understand that any laser cavity mirror 101-104 having the desired optical properties, including reflectivity, at the laser wavelength and the necessary laser-induced damage threshold may be suitable. The skilled person will also understand that the mirror is chosen based on the laser and wavelengths of light within the cavity, as well as based on custom requirements.

The Q-switch may, for example, be: an active acousto-optical or electro-optical Q-switch; a passive Q-switch by saturable absorbers crystals such as Cr:YAG, Cr:GSGG, Co:MALO or V:YAG; or a combined active-passive Q-switch.

The second harmonic generator may be KDP but, again, the skilled person will understand that other materials may be equally suitable and the material is chosen based on the fundamental frequency of the laser. Likewise, the third harmonic generator may be beta barium borate (BBO) or lithium triborate (LBO), for example.

The first and/or second optical element may be plane or curved mirrors made of UV-grade fused silica with coatings transmitting infra-red and reflecting higher harmonics. Alternatively, the first and/or second optical element may be a transparent optical window such as anti-reflection coated UV-grade fused silica or sapphire and the reflective element may be fixedly-mounted on the laser breadboard.

The first and second optical elements at least partially contribute to the encapsulation of the frequency conversion element. Encapsulation may be completed by sealing with bellows. Alternatively, encapsulation may be completed using a simple box-shape enclosure made from non-outgassing (in UV) material such as metal, ceramics, glass or PTFE. Further alternatively, mirrors and/or windows may be diffusion-bonded to the facets of the frequency conversion element. Hermetic sealing may be provided by using, preferably non-outgassing (in UV) material, such as indium foil/wire and/or PTFE gasket seals.

The kinematic platforms or mounts may be vertical or side alignment access, gimbal mounts, single-axis or two-axis kinematic mounts. The kinematic mounts could also be precisely pre-aligned and permanently soldered/glued elements. The thermally stabilising element may be a Peltier element or a micro-channel cooling plate connected with temperature controlled heat exchanger, for example. The gas purge may be nitrogen, a mix of dry air with oxygen, an inert gas or mixture of inert gases or a close-loop dry air filtered from outgassing products, for example.

The invention is not restricted to the described embodiments but extends to the full scope of the appended claims.

## Claims

1. An intracavity module (200) arranged to be replaceably mounted inside a laser resonator cavity (100), the intracavity module (200) comprising:
a first optical element (202);
a second optical element (203); and
a frequency conversion element (201) arranged to receive light at a first frequency and output light at a second frequency, wherein the first optical element (202) is at least partially transmissive at the first frequency;
and
wherein the frequency conversion element (201) is encapsulated by at least the first optical element (202) and the second optical element (203);
wherein the first optical element (202) and second optical element (203) are reflective at the second frequency;
wherein the frequency conversion element (201) is hermetically sealed in a housing which comprises the first and second optical elements (202,203);
wherein the frequency conversion element (201) is further encapsulated by bellows (204);
wherein the first optical element (202) is a first intracavity mirror (202) and the second optical element (203) is a second intracavity mirror (203) wherein the first intracavity mirror (202), second intracavity mirror (203) and frequency conversion element (201) are arranged on a common optical axis to form a resonant cavity at the second frequency;
wherein the frequency conversion element (201) is mounted on a kinematic platform (208); and
wherein the first optical element (202) and second optical element (203) are mounted on a kinematic platform (205).

2. An intracavity module as claimed in claim 1 wherein at least one of:
the first frequency is the fundamental frequency of the laser resonator cavity and/or a higher frequency harmonic of the fundamental frequency of the laser resonator cavity;
or
the second frequency is a higher frequency harmonic of the first frequency;
or
the second optical element is reflective at the first frequency.

3. An intracavity module as claimed in any preceding claim wherein a first surface of the first and/or second optical elements is sealed from the external environment.

4. An intracavity module as claimed in any preceding claim wherein the frequency conversion element comprises a non-linear optical crystal.

5. An intracavity module as claimed in any preceding claim wherein the frequency conversion element is thermal stabilised, optionally, by a Peltier element, further optionally, wherein the Peltier element is mounted on a water-cooled platform.

6. An intracavity module as claimed in any preceding claim wherein the first and/or second optical elements are intracavity mirrors and are water-cooled.

7. An intracavity module as claimed in any preceding claim wherein encapsulated space between the frequency conversion element and the first and second optical elements is gas purged and/or vacuum.

8. An intracavity module as claimed in any preceding claim wherein at least one facet of the frequency conversion element is bonded to an optical window.

9. An intracavity module as claimed in any preceding claim wherein the intracavity module is attached to translation means for translating the intracavity module in one or more directions.

10. A laser resonator cavity comprising:
a first laser cavity mirror;
a laser gain medium;
an intracavity module as claimed in any of claims 1-9;
wherein the second optical element of the intracavity module is arranged to form the second laser cavity mirror.

11. A laser resonator cavity as claimed in claim 10 further comprising a second harmonic generator between the intracavity module and the first laser cavity mirror.

## Patentansprüche

1. Intrakavitätsmodul (200), das angeordnet ist, auswechselbar innerhalb einer Laserresonatorkavität (100) montiert zu werden, das Intrakavitätsmodul (200) aufweisend:
ein erstes optisches Element (202);
ein zweites optisches Element (203); und
ein Frequenzwandlungselement (201), das angeordnet ist, Licht bei einer ersten Frequenz zu empfangen und Licht bei einer zweiten Frequenz auszugeben, wobei das erste optische Element (202) mindestens teilweise bei der ersten Frequenz durchlässig ist;
und
wobei das Frequenzwandlungselement (201) von mindestens dem ersten optischen Element (202) und dem zweiten optischen Element (203) umschlossen wird;
wobei das erste optische Element (202) und das zweite optische Element (203) bei der zweiten Frequenz reflektierend sind;
wobei das Frequenzwandlungselement (201) hermetisch in einem Gehäuse abgedichtet ist, das die ersten und zweiten optischen Elemente (202,203) aufweist;
wobei das Frequenzwandlungselement (201) ferner von Bälgen (204) umschlossen wird;
wobei das erste optische Element (202) ein erster Intrakavitätsspiegel (202) ist und das zweite optische Element (203) ein zweiter Intrakavitätsspiegel (203) ist, wobei der erste Intrakavitätsspiegel (202), zweite Intrakavitätsspiegel (203) und das Frequenzwandlungselement (201) auf einer gemeinsamen optischen Achse angeordnet sind, um eine resonante Kavität bei der zweiten Frequenz zu bilden;
wobei das Frequenzwandlungselement (201) auf einer kinematischen Plattform (208) montiert ist; und
wobei das erste optische Element (202) und zweite optische Element (203) auf einer kinematischen Plattform (205) montiert sind.

2. Intrakavitätsmodul nach Anspruch 1, wobei mindestens eines gilt von:
die erste Frequenz ist die Grundfrequenz der Laserresonatorkavität und/oder eine höhere harmonische Frequenz der Grundfrequenz der Laserresonatorkavität ;
oder
die zweite Frequenz ist eine höhere harmonische Frequenz der ersten Frequenz;
oder
das zweite optische Element reflektiert bei der ersten Frequenz.

3. Intrakavitätsmodul nach einem der vorangehenden Ansprüche, wobei eine erste Fläche der ersten und/oder zweiten optischen Elemente von der Außenumgebung abgedichtet sind.

4. Intrakavitätsmodul nach einem der vorangehenden Ansprüche, wobei das Frequenzwandlungselement einen nichtlinearen optischen Kristall aufweist.

5. Intrakavitätsmodul nach einem der vorangehenden Ansprüche, wobei das Frequenzwandlungselement thermostabilisiert ist, optional durch ein Peltier-Element, weiterhin optional, wobei das Peltier-Element auf einer wassergekühlten Plattform montiert ist.

6. Intrakavitätsmodul nach einem der vorangehenden Ansprüche, wobei die ersten und/oder zweiten optischen Elemente Intrakavitätsspiegel und wassergekühlt sind.

7. Intrakavitätsmodul nach einem der vorangehenden Ansprüche, wobei ein umschlossener Raum zwischen dem Frequenzwandlungselement und den ersten und zweiten optischen Elementen gasgespült und/oder Vakuum ist.

8. Intrakavitätsmodul nach einem der vorangehenden Ansprüche, wobei mindestens eine Facette des Frequenzwandlungselements an ein optisches Fenster gebunden ist.

9. Intrakavitätsmodul nach einem der vorangehenden Ansprüche, wobei das Intrakavitätsmodul an Verschiebungsmitteln befestigt ist, um das Intrakavitätsmodul in eine oder mehr Richtungen zu verschieben.

10. Laserresonatorkavität, aufweisend:
einen ersten Laserkavitätsspiegel;
ein Laserverstärkungsmedium;
ein Intrakavitätsmodul nach einem der Ansprüche 1-9;
wobei das zweite optische Element des Intrakavitätsmoduls angeordnet ist, um den zweiten Laserkavitätsspiegel zu bilden.

11. Laserresonatorkavität nach Anspruch 10, ferner aufweisend einen Generator der zweiten Harmonischen zwischen dem Intrakavitätsmodul und dem ersten Laserkavitätsspiegel.

## Revendications

1. Module intracavité (200) conçu pour être monté remplaçable à l'intérieur d'une cavité de résonateur laser (100), le module intracavité (200) comprenant :
un premier élément optique (202) ;
un second élément optique (203) ; et
un élément de conversion de fréquence (201) conçu pour recevoir une lumière à une première fréquence et fournir en sortie une lumière à une seconde fréquence, dans lequel le premier élément optique (202) est au moins partiellement transmissif à la première fréquence ;
et
dans lequel l'élément de conversion de fréquence (201) est encapsulé par au moins le premier élément optique (202) et le second élément optique (203) ;
dans lequel le premier élément optique (202) et le second élément optique (203) sont réfléchissants à la seconde fréquence ;
dans lequel l'élément de conversion de fréquence (201) est scellé hermétiquement dans un boîtier qui comprend les premier et second éléments optiques (202, 203) ;
dans lequel l'élément de conversion de fréquence (201) est en outre encapsulé par des soufflets (204) ;
dans lequel le premier élément optique (202) est un premier miroir intracavité (202) et le second élément optique (203) est un second miroir intracavité (203), dans lequel le premier miroir intracavité (202), le second miroir intracavité (203) et l'élément de conversion de fréquence (201) sont agencés sur un axe optique commun pour former une cavité résonante à la seconde fréquence ;
dans lequel l'élément de conversion de fréquence (201) est monté sur une plate-forme cinématique (208) ; et
dans lequel le premier élément optique (202) et le second élément optique (203) sont montés sur une plate-forme cinématique (205).

2. Module intracavité selon la revendication 1, dans lequel au moins l'un parmi :
la première fréquence est la fréquence fondamentale de la cavité de résonateur laser et/ou une harmonique de fréquence plus élevée de la fréquence fondamentale de la cavité de résonateur laser ;
ou
la seconde fréquence est une harmonique de fréquence plus élevée de la première fréquence ;
ou
le second élément optique est réfléchissant à la première fréquence.

3. Module intracavité selon l'une quelconque des revendications précédentes, dans lequel une première surface des premier et/ou second éléments optiques est scellée vis-à-vis de l'environnement externe.

4. Module intracavité selon l'une quelconque des revendications précédentes, dans lequel l'élément de conversion de fréquence comprend un cristal optique non linéaire.

5. Module intracavité selon l'une quelconque des revendications précédentes, dans lequel l'élément de conversion de fréquence est stabilisé thermiquement, facultativement, par un élément Peltier, facultativement en outre, dans lequel l'élément Peltier est monté sur une plate-forme refroidie à l'eau.

6. Module intracavité selon l'une quelconque des revendications précédentes, dans lequel les premier et/ou second éléments optiques sont des miroirs intracavité et sont refroidis à l'eau.

7. Module intracavité selon l'une quelconque des revendications précédentes, dans lequel un espace encapsulé entre l'élément de conversion de fréquence et les premier et second éléments optiques est purgé au gaz et/ou est sous vide.

8. Module intracavité selon l'une quelconque des revendications précédentes, dans lequel au moins une facette de l'élément de conversion de fréquence est liée à une fenêtre optique.

9. Module intracavité selon l'une quelconque des revendications précédentes, dans lequel le module intracavité est attaché à un moyen de translation pour translater le module intracavité dans une ou plusieurs directions.

10. Cavité de résonateur laser comprenant :
un premier miroir de cavité laser ;
un support de gain laser ;
un module intracavité tel que revendiqué dans l'une quelconque des revendications 1 à 9 ;
dans laquelle le second élément optique du module intracavité est conçu pour former le second miroir de cavité laser.

11. Cavité de résonateur laser selon la revendication 10, comprenant en outre un second générateur d'harmoniques entre le module intracavité et le premier miroir de cavité laser.
